Europäisches Patentamt

European Patent Office

Office européen des brevets

(19)

(11) **EP 1 281 322 A1**

(12) **EUROPEAN PATENT APPLICATION**

(43) Date of publication:
**05.02.2003 Bulletin 2003/06**

(51) Int Cl.⁷: **A23C 21/02**, A23J 3/04,
A23J 3/14, A23L 1/24

(21) Application number: **01202909.6**

(22) Date of filing: **31.07.2001**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **Wageningen Centre for Food Sciences
6700 AN Wageningen (NL)**

(72) Inventors:
• **Alting, Aart Cornelis
  6718 HW Ede (NL)**

• **Visschers, Ronald Willem
  6715 DH Ede (NL)**
• **Hugenhoultz, Jeroen
  6721 MR Bennekom (NL)**

(74) Representative: **Jorritsma, Ruurd et al
Nederlandsch Octrooibureau
Scheveningseweg 82
P.O. Box 29720
2502 LS Den Haag (NL)**

(54) **Preparation of a gelled aqueous composition by means of microbial acidification**

(57)    The present invention relates to a novel process for preparing a gelled aqueous composition, which process employs a gel-forming globular protein such as whey protein, ovalbumin or soy protein. More particularly the present invention concerns a process for preparing a product comprising a gelled aqueous composition, said composition containing at least 50 wt.% water, wherein the process comprises:

a. preparing an aqueous solution of a gel-forming globular protein comprising at least 3%, preferably at least 4.5% of the globular protein by weight of water;

b. if necessary, adjusting the pH of the solution to at least 1 unit above the iso-clectric point of the globular protein;

c. heating and/or pressurising said aqueous solution so as to obtain a suspension of aggregates of the globular protein, which aggregates have a number weighted average particle size in the range of 10-300 nanometers, preferably in the range of 15-200 nanometers;

d. optionally, diluting the suspension to a concentration of at least 1% globular protein by weight of water

e. inoculating the suspension with a micro-organism capable of acidifying the suspension;

f. fermenting the suspension with the micro-organism so as to reduce the pH by at least 0.5 units to between 1 unit above and 1.5 units below the iso-electric point of the globular protein, preferably to between 0.8 units above and 1.0 unit below the iso-electric point.

The invention also relates to products obtainable by the above process.

EP 1 281 322 A1

**Description**

TECHNICAL FIELD

The present invention relates to a novel process for preparing a gelled aqueous composition, which process employs a gel-forming globular protein such as whey protein, ovalbumin or soy protein. The process according to the invention comprises a first step wherein an aqueous solution of the globular protein is subjected to heating and/or high pressure so as to obtain a suspension of protein aggregates, followed by another step wherein the suspension of aggregates is subjected to microbial acidification so as to lower the pH to a level at which the aggregates of globular protein will start forming a gel network.

Another aspect of the invention relates to aqueous gelled compositions which can be obtained by the present process.

BACKGROUND OF THE INVENTION

US 2,465,905 (Western Condensation Company) describes a process for making condensed whey products comprising the step of fermenting heated whey with acid producing micro-organisms, followed by concentrating the fermented product to a relatively low solids content adapted to gel without added agent. The protein content of whey (around 3 wt.%) is insufficient to allow for the formation of protein aggregates through coagulation that are large enough to obtain desirable gel properties.

WO 97/34498 (New Zealand Milk Products GmbH) describes a process for preparing a frozen yoghurt comprising the sequential steps of preheating, homogenising, pasteurising and cooling a milk protein containing solution, wherein the maximum ratio of whey protein to casein is 49.9 : 51.1, and inoculating with a yoghurt culture and fermenting to a pH of about 4.25 to 4.35.

JP 4-187050 (Snow Brand Milk Products Co. Ltd.) relates to ice cream products obtained by regulating a whey protein concentrate to 1-4% protein concentration, heating the regulated concentrate, adding at least one selected from the group consisting of lactic acid bacteria, yeasts and glucono-delta-lactone to the resultant heated concentrate, slowly acidifying the concentrate, forming a whey sour gel and mixing the resultant whey sour gel as a fat substitute with a nonfat ice cream base.

Gelled aqueous compositions based on globular proteins are widely used, particularly in the food industry. Many aqueous (e.g. semi-solid) food products that contain appreciable levels of whey protein, soy protein and/or ovalbumin, and which have been subjected to a heat treatment, comprise some form of (micro-)aggregated globular proteins. Aqueous solutions of globular proteins are known to form gels under the influence of heat and/or acid induced coagulation. In some food applications globular proteins are used to impart a desirable rheology to a food product. By adding the protein to the aqueous phase and allowing it to gel, the aqueous phase becomes "structured", meaning that it looses its capability to flow, acquires elastic properties, holds water and keeps particles suspended therein.

It is known to form gelled aqueous compositions by first heating an aqueous solution of globular protein and subsequently acidifying the solution to a pH near the iso-electric point. At or near the iso-electric point, the thiol groups present on the surface of the aggregates of the globular protein will react to form disulfide bridges between the aggregates. Thus strings of linked aggregates are formed which are usually heavily cross-linked and which together form a gel network. It is also known that the amount of thiol groups on the surface of the protein aggregates critically determines the mechanical properties of the gel network.

In order to form a gelled aqueous composition from a liquid suspension of protein aggregates obtained after heat treatment, an acidification step is required. The acidification necessary to induce gelation at the iso-electric point, is achieved through the addition of a sufficient amount of a food acid, such as lactic acid or citric acid, or by adding an acid-releasing acidulant, such a glucono delta-lactone. Such an acid releasing acidulant effectively acts as a precursor, which releases the acid over time. The addition of an acid-releasing acidulant has the advantage that the gelation process may be performed in a more controlled manner. Thus it is possible to effectively lower the rate of gelation which makes it possible to process and/or pump the product for some time after addition of the acid-releasing acidulant. Also the addition of such an acidulant makes it possible to dispense the product to which the acidulant has been added into a container and allowing most of the gelation to occur within said container.

A drawback of the use of a chemical acid-releasing acidulant is that such chemical substances are foreign to natural foodstuffs and that large consumer groups object to the use of such substances in food products. Another limitation to the use of acid-releasing acidulants is that the characteristics of the resulting gel are largely determined by the amount of acidulant that has been added. Hence it is not possible to manipulate the gelation process once the acidulant has been added.

Yet another drawback of the use of acid-releasing acidulants in the above described gelation process is related to the fact that a particular food product may display a certain buffering capacity which may fluctuate depending on the nature of its natural components. Hence the addition of a given amount of acid-releasing acidulant may produce a different end-pH depending on the buffering characteristics of the food component. Since the end-pH is highly correlated with the rate and extent of gelation it is easily understood that the use of an acid-releasing acidulant in foodstuffs with high buffering capacity requires careful adaptation of the dosage level to the buffering characteristics of said foodstuff.

In view of the above drawbacks there is a need for a process for acid-induced gelation of globular proteins, wherein acidification is achieved gradually and not through the use of a chemical acid-releasing substance, and wherein ideally the rate and/or extent of gelation can be manipulated even after gelation has started.

SUMMARY OF THE INVENTION

The inventors have found that the above objectives are achieved by a process comprising a first step wherein an aqueous solution of the globular protein is subjected to heating or high pressure so as to obtain a suspension of protein aggregates, followed by another step wherein the suspension of aggregates is subjected to microbial acidification so as to lower the pH to a level at which the aggregates of globular protein will start forming a gel network.

By first preparing an aqueous suspension of aggregates of globular protein, it is possible to subsequently prepare so called cold-set gels through slow acidification. The particle size of the aggregates formed during the heating/pressurising step largely determines the characteristics of the gels formed during the acid-gelation step. Hence the separation of the aggregate forming step and the gelation step offers the advantage that the aggregate-formation step and gelation-step may be optimised separately.

The use of microbial acidification was found to have several advantages over chemical acidification with a acid releasing acidulant such as glucono delta-lactone. An important advantage of microbial acidification is that, in the presence of sufficient nutrients, the acidifying micro-organisms will continue to produce acid until the pH is lowered to a level at which the metabolism of said micro-organisms can no longer function. This means that, in the presence of sufficient nutrients, irrespective of the nature of the product, the present process will always yield the same end-pH, i. e. the pH at which the microbial metabolism will come to a halt. Hence, because the resulting gel characteristics are largely dependent on the end pH, the present process offers the advantage of high reproducibility.

Another advantage of microbial acidification is that the gelation process can be controlled more easily. The growth rate and metabolic activity of the micro-organisms that can be used in the present process is very dependent on e.g. temperature. It is generally possible to reduce growth rate and metabolic activity to almost zero by lowering the temperature to e.g. below 10°C. Hence gelation may be halted at any time by manipulating the temperature. In addition it is possible to control the endpoint of the fermentation by the amount of nutrients included in the product. For instance, in the case of lactobacillus the end pH can easily be controlled by manipulating the amount of lactose in the product.

Contrary to gelation under the influence of chemical acidification, with the present process it is possible to control the gel characteristics of the aqueous composition by manipulating the rate of gelation, particularly through the number of viable micro-organisms used for inoculation. Thus it is possible to vary the gel characteristics independently of the pH of the gelled aqueous composition obtained by the present process.

Yet another advantage of microbial acidification is that micro-organisms inevitably produce a range of metabolites other than the acidifying component(s). Many of these metabolites can be very beneficial to the overall product characteristics. Examples of such beneficial metabolites which may be produced by the acidifying micro-organisms are: flavouring substances such as diacetyl, acetoin, acetaldehyde and methyl ketones, as well as bacteriocins. Also the presence of the micro-organisms per se can be benificial, for instance, if these micro-organisms belong to a strain with probiotic properties.

DETAILED DESCRIPTION OF THE INVENTION

One aspect of the present invention is concerned with a process for preparing a product comprising a gelled aqueous composition, said composition containing at least 50 wt.% water, wherein the process comprises:

a. preparing an aqueous solution of a gel-forming globular protein comprising at least 3%, preferably at least 4.5% of the globular protein by weight of water;
b. if necessary, adjusting the pH of the solution to at least 1 unit above the iso-electric point of the globular protein;
c. heating or pressurising said aqueous solution so as to obtain a suspension of aggregates of the globular protein, which aggregates have a number weighted average particle size in the range of 10-300 nanometers, preferably in the range of 15-200 nanometers;
d. optionally, diluting the suspension to a concentration of at least 1% globular protein by weight of water
e. inoculating the suspension with a micro-organism capable of acidifying the suspension;

f. fermenting the suspension with the micro-organism so as to reduce the pH by at least 0.5 units to between 1 unit above and 1.5 units below the iso-electric point of the globular protein, preferably to between 0.8 units above and 1.0 unit below the iso-electric point.

The present process yields a product comprising a gelled aqueous composition. The product obtained by the present process may effectively consist of the gelled aqueous composition, or alternatively it may contain the gelled aqueous composition as well as another distinguishable, usually non-aqueous phase. An example of such a non-aqueous phase is a fat phase. Combinations of a gelled aqueous phase and a fat phase are commonly applied in food products such as spreads, desserts, dressings and mayonnaise. Typical examples of spreads are margarine (80% fat), low fat spreads (40% fat) and very low fat spreads (20% fat). These spreads usually contain a continuous fat phase and a dispersed, optionally gelled, aqueous phase. Zero fat spreads are by definition water-continuous and derive their plasticity from the presence of gel network. Desserts are usually water-continuous may comprise a fat phase in an amount of only 1 wt. % up to about 40 wt.%. Mayonnaise is an example of a water-continuous food stuff which may suitably contain a gelled aqueous composition and as much as up to 80 wt.% of a dispersed oil phase.

From the above it will be clear that the product obtained by the present process may comprise no more than 20 wt.% of the gelled composition, e.g. in case the product is a margarine or a mayonnaise. The gelled composition, however, may also comprise 100 wt.% of the product, e.g. when the product is a zero fat spread, a zero fat dressing or a fat-free dessert. Hence, in a preferred embodiment relates the present process is used to prepare a product comprising from 15 to 100 wt.% of the gelled composition. More preferably the product obtained comprises from 15 to 100 wt.% of the gelled composition wherein the remainder consists of a fat phase and, optionally, another phase, e.g. solid particles, which does not dissolve in either the aqueous gelled composition or the fat phase. Constituents of the product prepared by the present process are deemed to be part of the phase in which they are dissolved or dispersed. Hence it should be understood that the aforementioned weight percentages apply to the gelled composition, the fat phase or the other phase including any components dissolved and/or dispersed therein.

Although the present process is particularly suitable for the preparation of foodstuffs, it may also advantageously be used in the preparation of gelled aqueous compositions which are used in non-food applications. Examples of such non-food applications areprotein based glues and protein based cosmetics.

In order to preserve the favourable characteristics of fermented suspension obtained from step f) it is preferred not to subject said suspension to any further processing conditions, such as shear, pressure and/or drying, that would damage the resulting gel network. Thus, following step f) the suspension is suitably packaged in a sealed container without any intermediate stirring, mixing or drying.

The present process can suitably employ any globular protein that is able to form aggregates under the influence of heat and/or pressure and which contains a significant amount of thiol groups. Preferably the globular protein contains at least 0.0001 wt.% cystein, more preferably 0.02 wt.% cystein. Globular proteins which are particularly suitable for use in the present process are whey proteins, soy proteins, ovalbumin, blood serum albumin and mixtures thereof. Most preferably the globular protein is selected from the group consisting of whey proteins, ovalbumin and mixtures thereof.

It is known that β-lactoglobulin, one of the main protein in whey protein, and κ-casein, one of the main constituents of casein, strongly interact when heated together. This interaction is mediated by a thiodisulfide interchange, leading to the formation of disulfide bonds which stabilise the resulting complex. This process intervenes with the formation of a gel network, thereby making it more difficult to control the gelation process. The formation of considerable amounts of β-lactoglobulin-κ-casein complexes was also found to have an adverse effect on the quality of the gelled aqueous composition obtained after microbial acidification. Hence, in a preferred embodiment of the present invention the aqueous composition is free of or contains less than 5% casein by weight of water and the weight ratio casein : globular protein is less than 1:1, preferably less than 1:2.

The step of producing a suspension of protein aggregates is a critical element of the present process. Only the part of the dissolved globular protein which is denatured to such an extent that it will form aggregates or coagulates, will actually be able to form a gel network. In order to make best use of the available globular protein it is advantageous to convert a significant fraction of the dissolved globular protein into protein aggregates. Hence, in a preferred embodiment of the present process, step c) comprises heating and/or pressurising the aqueous solution so as to convert at least 25% of the globular protein, preferably at least 40% of the globular protein, into aggregates. Usually the amount of denaturation achieved in step c) will exceed 50 % of the globular protein. Preferably in step c) at least 80% of the globular protein present in composition is denatured. The extent of denaturation is enhanced by increased protein concentration during heating.

In order to ensure that sufficient aggregates of globular protein are formed in step c), said step preferably comprises heating the aqueous solution to a temperature of at least 60°C and less than 159°C for at least a period of time equal to t, which period of heating t is governed by the following formula:

$$t = (500/(T-59)) — 4$$

wherein: t = duration of heating (in seconds) and

T = heating temperature (in °C).

More preferably the heating conditions complied are governed by the following formula: t = (90000/(T-59))-900.

The aforementioned formulas are graphically depicted in the following figure:

In order to induce formation of sufficient aggregates the globular protein, step c) preferably comprises pressurising to a hydrostatic pressure of at least 200 MPa for at least 10 seconds.

The size of the aggregates obtained in the present process is determined by means of Dynamic Light Scattering (DLS) as outlined by Verheul, M.; Roefs, S.P.F.M.; Mellema, J.; De Kruif, C.G. "Power law behaviour of structural properties of protein gels", *Langmuir.* **1998**, *14*, 2263-2268 using a Malvern Autosizer IIC Submicron Particle Size Distribution Analyzer. The system should comprise a Malvern PCS41 optics unit with a 5 mW He-Ne laser, and a Malvern K7032-ES correlator that can be used in serial configuration. The Autosizer IIC is to be operated at a fixed scattering angle of 90° and the wavelength of the laser beam should be 632.8 nm. Both the scattering intensity and the apparent diameter are to be evaluated. The quartz cuvette (10 mm) containing the sample is thermostatted by a Joule-Peltier thermostat (20 °C). The apparent diameter of the aggregates in solution is calculated from a cumulant lit of the intensity autocorrelation function. Before analysis, samples are filtered through a low-protein binding membrane (5 μm; Millex-SV, Millipore Corporation, Bedford, MA., USA).

Gel strength is a parameter often used to describe the characteristics of gel. Although various methods exist for determining the gel strength, they all have in common that they provide an indication as to the ability of a gel to resist deformation under influence of applied pressure. The aqueous composition obtained from the present process preferably has a mechanical gel strength of at least 5 grams. The mechanical gel strength is determined by a texture analyzer (type TA-XT2, Stable Micro Systems ltd., Godalming, England). The gelled aqueous composition is penetrated with a wire mesh-device. The mesh consists of 4 blades (45 x 1.5 x 2 mm) of stainless steel arranged in a double cross. A force-time curve is obtained at a crosshead speed of 0.3 mm/sec for a 10 mm displacement, and gel hardness is expressed as the force (in g) at the maximum peak of the force-time curve (Bourne, 1978). More preferably the aqueous composition obtained in the presen process has a gel strength in the range of 5 to 200 grams. It is to be understood that if the aqueous composition is part of product also comprising another phase, e.g. a continuous fat phase, the gel strength as mentioned above applies to the gelled aqueous phase *per se*.

It was found to be highly efficient to prepare the suspension of protein aggregates by heating and/or pressurising a relatively concentrated solution of globular protein, followed by a dilution step prior to microbial acidification. At relatively high concentrations of globular protein heating results in a more efficient denaturation of said globular protein. In the absence of a subsequent dilution step a very firm gel will be obtained, which is not suitable for most applications. Hence in a preferred embodiment of the present process in step c) the suspension of aggregates is obtained by heating or pressurising the aqueous solution containing at least 5 % globular protein by weight of water, followed by dilution to less than 4.5%, preferably less than 4% globular protein by weight of water.

Although for reasons of efficiency it may be advantageous to prepare the suspension protein aggregates from a highly concentrated protein solution, it is generally advisable to ensure that the resulting suspension is not too viscous to be pumped around. In other words, the suspension of aggregates obtained in step c) preferably is a pumpable fluid with a viscosity of less than 5000 cps, preferably less than 1000 cps.

The microbial acidification in the present process is suitably achieved with the help of any micro-organism capable of generating enough acid to achieve the necessary reduction in pH. In case the process is used to prepare a foodstuff it is preferred to use a food grade micro-organism. Also preferred are micro-organisms that are capable of producing appreciable amounts of an acid selected from the group of lactic acid, acetic acid, butyric acid, propionic acid, citric acid, gluconic acid and formic acid

In a particular preferred embodiment of the present invention the process comprises inoculating the suspension with a micro-organism selected from the group consisting of *Lactobacillus* species, *Lactococcus* species, *Propionibacterium* species, *Bifidobacterium* species, *Leuconostoc species*, *Propionibacterium species*, *Gluconobacter species*, *Pediococcus species*, *Acetobacter, Clostridium*, *Bacillus species, Carnobacterium species.* Preferably the micro-organism is selected from the group consisting of *Lactococcus* species, *Propionibacterium* species, *Bifidobacterium* species *and/or Acetobacter.*

As mentioned hereinbefore the use of microbial acidification offers the advantage that the gelation process may be manipulated so as to postpone gelation until after the inoculated suspension has been dispensed into a product container. Consequently, in a preferred embodiment of the invention, the suspension is packaged after inoculation and the fermentation is allowed to proceed within the package.

In order to obtain sufficient gelation it is preferred to continue fermentation for a period of at least 45 minutes, preferably at least 90 minutes. Here by "fermentation" is meant that the micro-organisms are (still) metabolically active and producing a pH lowering acid. In principle, the fermentation may continue for weeks, in particular if only a limited amount of inoculation culture was used and/or if the fermentation is allowed to progress at relatively low temperatures. However, it was found that if the fermentation is carried out at a relatively high rate the gelled aqueous compositions will posses a higher gel strength then if the same fermentation is carried out a lower rate (e.g. as a result of being inoculated with less micro-organism) even if the end-pH is the same in both cases. Hence in a preferred embodiment of the process the pH reduction as a result of fermentation is stopped or allowed to flatten out within a period of 12 hours, preferably within a period of 4 hours after starting the fermentation.

In order to obtain a gelled aqueous composition which does not exhibit undesirable flaws, such as syneresis, the ionic strength of the aqueous solution prior to heating in step c) is preferably kept at less than 0.5M, more preferably at less than 0.1M.

Another aspect of the invention relates to a product obtainable by the process as described hereinbefore.

Yet another aspect of the invention relates to a product consisting of:

a) from 15-100 wt.% of a gelled aqueous phase containing at least 50 wt.% water, at least 1% globular protein by weight of water, from 0-5% casein by weight of water, the weight ratio casein : globular protein being less than 1:1, said aqueous phase comprising a gel network of the globular protein, wherein the aqueous phase comprises micro-organisms or remnants of micro-organisms, the aqueous phase has a pH equal to the maximum pH at which the metabolism of said micro-organisms can no longer function and wherein the acidity of the aqueous phase largely derived from an acid which is produced by said micro-organisms,

b) from 0-85 wt.% of a fat phase, and

c) from 0-40 wt.% of another phase.

In a particularly preferred embodiment of the invention the product is a dessert, spread, dressing, sauce or mayonnaise. The benefits of the present invention are appreciated in both water-continuous and fat-contiuous products. However, the beneficial effects are most pronounced in water-continuous products. Similarly, although high-fat products, such as margarine and full fat mayonnaise, may advantageously comprise a gelled aqueous phase as described above, the benefits are especially prominent in products containing less than 50 wt.% fat phase, preferably less than 30 wt.% fat phase and most preferably less than 15 wt.% fat phase.

EXAMPLES

Heat induced aggregates from Bipro (a purified whey protein isolate) and from heated ovalbumin (purified from hen egg-white) were used to prepare cold-set gels using bacterial acidification.

*Preparation of a suspension of aggregates*

Whey proteina aggregates were prepared from a solution of 9% Bipro ™ (ex Davisco Foods International Inc. La Sueur MN, USA) by heating for 2 hours at 68.5°C following standard procedures (Alting AC, Hamer RJ, de kruif, CG and Visschers RW J. Agric. Food Chem. 2000 (48): 5001-5007). This converts more than 95% of the native protein into reactive aggregates. The resulting aggregates have a mean diameter of 55 nm as determined from dynamic light-scattering (Alting et al, 2000). The aggregates prepared in this way contain reactive thiol groups exposed on their surface and are thus capable of forming chemical cross-links.

For ovalbumin, a prolonged heating (19.5 hrs) of a 6% solution at 78 C under nitrogen was used to convert more than 95 % of the native protein into reactive aggregates, as demonstrated by gel-filtration experiments described by *Hoffman MA*, *and van Mil, PJJM* 1997, J. Agric. Food. Chem. 45: 2942-2948. The ovalbumin aggregates prepared in this way, have a much smaller radius (20 nm) than the whey protein aggregates as determined from dynamic light-scattering.

*Dilution and microbial acidification*

Prior to gelation, both types of aggregates were diluted to a final protein concentration of 2%. At this concentration firm gels can be made from reactive whey protein aggregates by microbial acidification. Acid induced cold-set gels were prepared by adding different amounts of lactic acid bacteria In this case a *Lb. Plantarum* strain was used. However any other glucose fermenting lactic acid bacterium may be used to obtain similar results. The same holds true for other micro-organisms capable of producing food grade acids, such asacetic acid bacteria (Acetobacter sp).

The inoculation was done with bacteria that were harvested from a fresh overnight culture grown in M17 broth (Merck AG, Darmstadt, Germany) with glucose as a carbon source. This overnight culture was centrifuged to collect the bacteria as a pellet. The remaining supernatant was decanted and discarded. The bacteria were resuspended in double distilled water to a final volume between 0.5 and 4% of the volume of the original culture. From this suspension an aliquot was added to the protein solution such that the total amount of bacteria added in the inoculum was equal to 0.1 to 50% of the amount of bacteria that an overnight culture of the same volume as the protein suspension would contain. Fermentation was carried out in closed vials at room temperature. During the acidification process the pH of the gel was continuously measured and after 24 hours the mechanical gel-strength was determined using a texture analyser as described herein before.

*Effect of final pH*

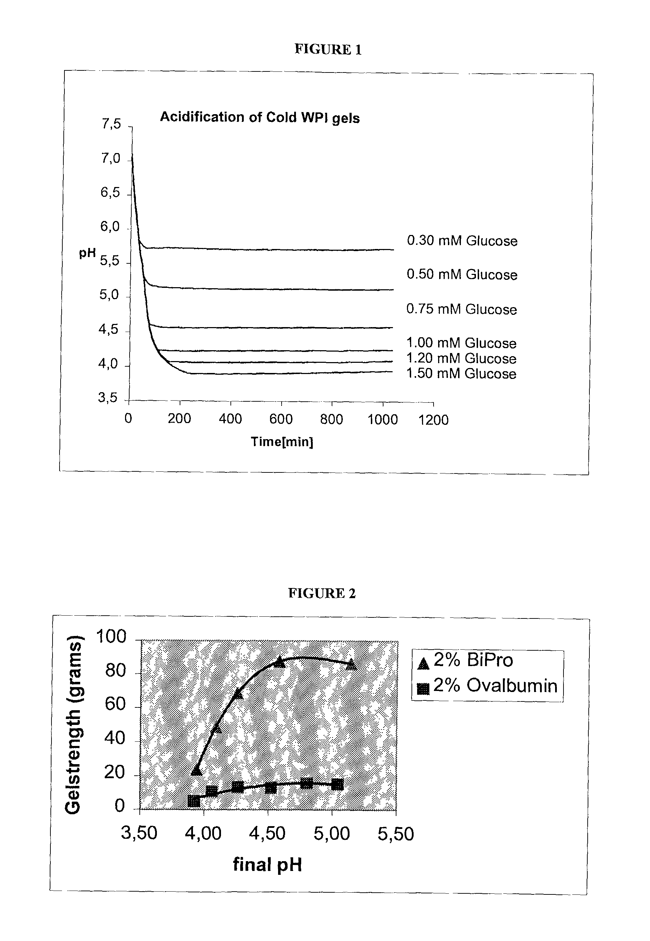

The effect of final pH on the gel strength of gels prepared by bacterial acidification was investigated. Figure 1 shows the kinetics of acidification of aggregate solutions to which different amounts of glucose had been added. For all glucose concentrations a gel is formed during the acidification. The final pH that is reached in the gels is directly determined by the amount of glucose available for fermentation. It is important to note that, since the initial amount of bacteria added is the same (50%, in accordance with the protocol described above) the initial rate of acidifaction is the same for all glucose concentrations and that the acidification levels off quickly when all the glucose has been used.

The mechanical strength of the gels formed during the fermentation depends directly on the their final pH as is evident from Figure 2 depicts the measured gelstrcngth as a function of the final pH for both the whey protein and ovalbumin gels. The gel strength data presented in Figure 2 were obtained by measuring the gelstrength at a preset penetration of 5 mm.

From figure 2 it can be concluded that a clear plateau exists between pH 4.3 and 5.2 for both types of gels. A similar plateau is found when the solution of whey protein is chemically acidified using different amounts of glucono delta-lactone. In the case of chemical acidification, however, the final gelstrength was 10-25% less than the gelstrength obtained after bacterial acidification, especially around pH 5. Below a pH of 4.3 the gelstrength starts to decrease rapidly and when the pH falls below 3.6 the gels start to become liquid again, an observation that was also made for gels prepared by chemical acidification with GDL.

Gels were also prepared by bacterial acidification of 2% ovalbumin solutions. In this case the formed gels were found to be weaker than the 2% whey protein gels. This is probably caused by the fact that the reactive ovalbumin aggregates were much smaller in size compared to the whey protein gels. It was previously found that smaller whey protein aggregates tend to form weaker gels than bigger aggregates obtained from the same whey protein. In case of the ovalbumin gels a similar plateau in gelstrength as for the whey protein gels was observed between pH 4.5 and 5.

*Effect of acidification rate on gelstrength*

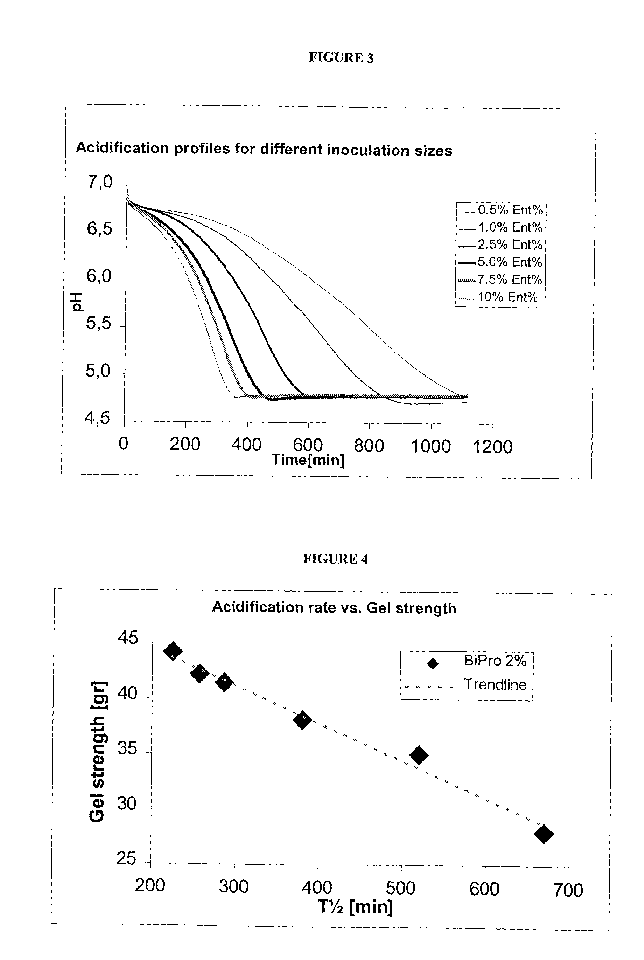

The presence of a pH region in which the gelstrength hardly depends on the final pH of the gel made it possible to determine the effect of different acidification profiles on the final strength of the resulting gels. By changing the initial amount of bacteria that is added to the aggregate solution the rate of acidification may be varied. In contrast to the previous experiments, in this case the same of amount glucose was added. The amount of glucose was chosen such that the final pH that is reached during fermentation is limited by the amount of glucose. In general the final pH of the gels was 4.5 +/- 0.05. Figure 3 shows the kinetics of acidification for whey protein aggregates. It can be seen that the rate of acidification is slower when less bacteria are added. The time it takes to reach a pH of 5.5 varies from 220 to 750 minutes for 10% and 0.5% inoculation percentages respectively.

After the gels were set and a stable pH was reached the mechanical strength of the gels was measured. The final gelstrength depends on the rate of acidification, both for whey protein and ovalbumin gels. In figure 4 the relation between rate of acidificication and final gelstrengths are given for both the whey protein and ovalbumin gels.

## Claims

1. Process for preparing a product comprising a gelled aqueous composition, said composition containing at least 50 wt.% water, wherein the process comprises:

   a. preparing an aqueous solution of a gel-forming globular protein comprising at least 3%, preferably at least 4.5% of the globular protein by weight of water;
   b. if necessary, adjusting the pH of the solution to at least 1 unit above the iso-electric point of the globular protein;
   c. heating and/or pressurising said aqueous solution so as to obtain a suspension of aggregates of the globular protein, which aggregates have a number weighted average particle size in the range of 10-300 nanometers, preferably in the range of 15-200 nanometers;
   d. optionally, diluting the suspension to a concentration of at least 1% globular protein by weight of water
   e. inoculating the suspension with a micro-organism capable of acidifying the suspension;
   f. fermenting the suspension with the micro-organism so as to reduce the pH by at least 0.5 units to between 1 unit above and 1.5 units below the iso-electric point of the globular protein, preferably to between 0.8 units above and 1.0 unit below the iso-electric point.

2. Process according to claim 1, wherein the protein is a globular, cystein containing protein with an iso-electric point between pH 7 and pH 4, preferably selected from the group consisting of whey proteins, soy proteins, ovalbumin, blood serum albumin and mixtures thereof.

3. Process according to claim 1 or 2, wherein the aqueous composition is free of or contains less than 5% casein by weight of water and wherein the weight ratio casein : globular protein is less than 1:1, preferably less than 1:2.

4. Process according to any one of claims 1 to 3, wherein the fermentation of the suspension in step f) produces a gelled aqueous composition with a mechanical gel strength of at least 5 gram, preferably a gel strength in the range of 5 to 200 grams.

5. Process according to any one of claims 1-4, wherein in step c) the suspension of aggregates is obtained by heating or pressurising the aqueous solution containing at least 5 % globular protein by weight of water, followed by dilution to less than 4.5%, preferably less than 4% globular protein by weight of water.

6. Process according to any one of claims 1-5, wherein the suspension is inoculated with a micro-organism selected from the group consisting of *Lactobacillus* species, *Lactococcus* species, *Propionibacterium* species, *Bifidobacterium* species, *Leuconostoc species*, *Propionibacterium species*, *Gluconobacter species, Pediococcus species, Acetobacter, Clostridium, Bacillus species, Carnobacterium species.*

7. Process according to any one of claims 1-6, wherein after inoculation the suspension is packaged and the fermentation is allowed to proceed within the package.

8. Process according to any one of claims 1-7, wherein the ionic strength of the aqueous solution prior to heating in step c) is less than 0.5M, preferably less than 0.1M.

9. Product obtainable by a process according to any one of claims 1 to 8.

10. Product consisting of:

    a) from 15-100 wt.% of a gelled aqueous phase containing at least 50 wt.% water, at least 1% globular protein by weight of water, from 0-5% casein by weight of water, the weight ratio casein : globular protein being less than 1:1, said aqueous phase comprising a gel network of the globular protein, wherein the aqueous phase comprises micro-organisms or remnants of micro-organisms, the aqueous phase has a pH equal to the maximum pH at which the metabolism of said micro-organisms can no longer function and wherein the acidity of the aqueous phase largely derived from an acid which is produced by said micro-organisms,

b) from 0-85 wt.% of a fat phase, and

c) from 0-40 wt.% of another phase.

**11.** Product according to claim 9 or 10, wherein the product is a dessert, spread, dressing, sauce or mayonnaise.

**FIGURE 1**

**FIGURE 2**

**FIGURE 3**

Acidification profiles for different inoculation sizes

**FIGURE 4**

Acidification rate vs. Gel strength

**European Patent Office**

## EUROPEAN SEARCH REPORT

Application Number

EP 01 20 2909

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 4 303 678 A (OGASA KATSUHIRO ET AL) 1 December 1981 (1981-12-01) | 1-3,6,7, 9 | A23C21/02 A23J3/04 A23J3/14 A23L1/24 |
| X | * claims * | 10,11 | |
| A | US 4 066 792 A (KANDA HIROSHI ET AL) 3 January 1978 (1978-01-03) | 1-3,6,9 | |
| X | * claims; examples * | 10,11 | |
| D,A | US 2 465 905 A (MEADE REGINALD E ET AL) 29 March 1949 (1949-03-29) * the whole document * | 1,2,6,9 | |
| A | DE 23 19 457 A (ROINER FRANZ XAVER JULIUS DIPL) 7 November 1974 (1974-11-07) * page 3, line 6 - line 29; claims; examples * | 1,2,9,10 | |
| A | US 5 645 877 A (GAIER WALTER) 8 July 1997 (1997-07-08) * claims 1-11 * | 1-3,6,9 | |

TECHNICAL FIELDS SEARCHED (Int.Cl.7)

A23C
A23J
A23L

The present search report has been drawn up for all claims

| Place of search | Date of completion of the search | Examiner |
|---|---|---|
| THE HAGUE | 8 February 2002 | Grittern, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 01 20 2909

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2002

| Patent document cited in search report | | Publication date | Patent family member(s) | | Publication date |
|---|---|---|---|---|---|
| US 4303678 | A | 01-12-1981 | JP<br>JP<br>JP | 1326605 C<br>56026167 A<br>60053589 B | 16-07-1986<br>13-03-1981<br>26-11-1985 |
| US 4066792 | A | 03-01-1978 | NONE | | |
| US 2465905 | A | 29-03-1949 | NONE | | |
| DE 2319457 | A | 07-11-1974 | DE<br>AT<br>AT<br>CH<br>IT<br>NL | 2319457 A1<br>342962 B<br>318074 A<br>595770 A5<br>1009890 B<br>7405185 A | 07-11-1974<br>10-05-1978<br>15-08-1977<br>28-02-1978<br>20-12-1976<br>21-10-1974 |
| US 5645877 | A | 08-07-1997 | EP<br>AT<br>AU<br>AU<br>CA<br>DE<br>DE<br>DK<br>ES<br>FI<br>GR<br>JP<br>NZ<br>US | 0689769 A1<br>183887 T<br>700099 B2<br>2053695 A<br>2151296 A1<br>69420397 D1<br>69420397 T2<br>689769 T3<br>2137292 T3<br>953071 A<br>3031951 T3<br>8051935 A<br>272412 A<br>5759598 A | 03-01-1996<br>15-09-1999<br>24-12-1998<br>11-01-1996<br>30-12-1995<br>07-10-1999<br>23-12-1999<br>07-02-2000<br>16-12-1999<br>30-12-1995<br>31-03-2000<br>27-02-1996<br>27-05-1998<br>02-06-1998 |

EPO FORM P0459

For more details about this annex : see Official Journal of the European Patent Office, No. 12/82